# EUROPÄISCHE PATENTSCHRIFT

(11) **EP 2 066 574 B1**
(45) Veröffentlichungstag und Bekanntmachung des Hinweises auf die Patenterteilung: **16.10.2013**
(21) Anmeldenummer: 07801481.8
(22) Anmeldetag: 01.08.2007
(51) Int. Cl.: B65G 47/08, B65G 47/71, B65B 35/44

(54) **VERFAHREN UND VORRICHTUNG ZUM HANDHABEN VON WINDELN**
METHOD OF, AND APPARATUS FOR, HANDLING NAPPIES
PROCÉDÉ ET DISPOSITIF DE MANUTENTION DE COUCHES

(30) Priorität: 21.09.2006 DE 102006045087
(43) Veröffentlichungstag der Anmeldung: 10.06.2009
(73) Patentinhaber: Focke & Co. (GmbH & Co. KG), 27283 Verden (DE)
(72) Erfinder: BRANDHORST, Björn, 48477 Hörstel (DE); SCHULTE, Josef, 26871 Aschendorf (DE)
(74) Vertreter: Bolte, Erich
(86) Internationale Anmeldenummer: PCT/EP2007/006794
(87) Internationale Veröffentlichungsnummer: WO 2008/034488

(56) Entgegenhaltungen:
- EP-A- 1 162 146
- EP-A- 1 352 836
- EP-A- 1 681 250
- DE-A1- 2 559 138
- US-A- 5 897 291
- US-A1- 2005 055 988

## Beschreibung

Die Erfindung betrifft ein Verfahren zum Handhaben von flächigen bzw. dünnwandigen Gegenständen, wie Windeln, und zum Transport derselben zu einer Verpackungsmaschine, wobei die Gegenstände, insbesondere Windeln, einzeln, aufeinanderfolgend von einer Herstellmaschine bzw. von einem Vorrat kommend im Bereich einer Gruppiereinrichtung zu Gruppen, insbesondere Windelgruppen zusammengestellt und diese der Verpackungsmaschine zugeführt werden. Weiterhin betrifft die Erfindung eine Vorrichtung zur Durchführung des Verfahrens.

Windeln werden als vorzugsweise gefaltete, flache Gebilde mit insbesondere etwa rechteckiger oder quadratischer Form verpackt. Jeweils eine Windelgruppe aus einer Anzahl von aneinanderliegenden Windeln bildet den Inhalt einer (Beutel-)Verpackung.

Bekannt ist die Zusammenstellung von Windelgruppen mittels Fächerband (US 5 897 291). Die Windeln werden nacheinander dem Fächerband zugeführt und finden Aufnahme in zwischen Stegen des Fächerbandes gebildeten Zwischenräumen. Eine Anzahl von im Fächerband nebeneinander liegenden Windeln wird quer zur Ausrichtung des Fächerbandes durch einen Schieber ausgeschoben und als Windelgruppe auf einer Plattform abgesetzt. Diese ist aufwärts bewegbar und übergibt die Windelgruppe an einen oberhalb des Fächerbandes angeordneten Gruppenförderer, der die Windelgruppen nacheinander zu einer Verpackungsmaschine transportiert. Die Windelgruppen werden so zusammengestellt, dass jeweils zwei Gruppen bei besonderer Relativstellung der einzelnen Windeln von Gruppe zu Gruppe in einer Packung Aufnahme finden. Diese bekannte Vorrichtung ist hinsichtlich der Leistungsfähigkeit begrenzt.

Der Erfindung liegt die Aufgabe zugrunde, Verfahren und Vorrichtung darzustellen, die zu einer höheren Leistungsfähigkeit bei der Verpackung von Windeln und anderen flachen Gegenständen führt und eine verbesserte Abstimmung zwischen der Leistungsfähigkeit der Herstellmaschine und den Verpackungsmaschinen schafft.

Zur Lösung dieser Aufgabe ist das erfindungsgemäße Verfahren durch folgende Merkmale gekennzeichnet:
a) die Gruppen der Gegenstände bzw. die Windelgruppen werden im Anschluss an die Gruppiereinrichtung in zwei Transportbahnen einer zweibahnigen Verpackungsmaschine oder mehreren Verpackungsmaschinen zugeführt,
b) die Gegenstände bzw. Windeln werden in einer Ausrichtung in horizontaler Ebene zugeführt und während des Transports in eine aufrechte Ebene gewendet,
c) die aufrechten Gegenstände bzw. Windeln werden an Gruppieraggregate der Gruppiereinrichtung übergeben zur Bildung von Gruppen der Gegenstände bzw. von Windelgruppen unabhängig voneinander,
d) die Gruppen der Gegenstände bzw. die Windelgruppen werden getrennt voneinander über den Gruppieraggregaten zugeordnete Abförderer der bzw. den Verpackungsmaschinen zugeführt.

Das erfindungsgemäße Verfahren findet insbesondere Anwendung, wenn durch eine oder mehrere Herstellmaschinen die Anzahl der je Zeiteinheit produzierten Windeln deutlich größer ist als die Leistung der nachgeordneten Verpackungsmaschine. Erfindungsgemäß werden die Gruppen auf zwei (oder mehr) Produktströme verteilt und entweder einer mehrbahnigen Verpackungsmaschine oder mehreren nachgeordneten Verpackungsmaschinen zugeführt.

Eine andere Besonderheit der Erfindung besteht darin, dass die ankommenden (einzelnen) Windeln in horizontaler Ebene ausgerichtet und während des Transports im Bereich der Gruppiereinrichtung aufgerichtet werden in eine vertikale Ebene.

Die erfindungsgemäße Vorrichtung besteht aus Fördereinheiten, nämlich paarweise zusammenwirkenden Gurten, die zwischen einander zugekehrten Fördertrumen die Windeln transportieren. Zweigförderer bilden von einer Weiche bzw. einer Verzweigung ausgehende Transportbahnen für einzelne Windeln oder für eine Vorgruppe. Organe zur Bildung der Gruppen bestehen aus Fächerbändern, die insbesondere quer zu den ankommenden Förderern gerichtet sind. Vorzugsweise weist die Gruppiereinrichtung zwei nebeneinander liegende Gruppieraggregate auf, die gleichzeitig oder zeitlich versetzt Windelgruppen bilden und an mindestens zwei Abförderer übergeben.

Weitere Einzelheiten der Erfindung werden nachfolgend anhand der Zeichnungen näher erläutert. Es zeigt:
- Fig. 1: ein Ausführungsbeispiel einer Gruppiereinrichtung in Seitenansicht,
- Fig. 2: die Gruppiereinrichtung gemäß Fig. 1 in Draufsicht,
- Fig. 3: eine Einzelheit III der Fig. 2 in vergrößertem Maßstab, nämlich eine Abschubstation für Windelgruppen in Draufsicht,
- Fig. 4: eine andere Einzelheit IV der Fig. 2 in vergrößertem Maßstab, nämlich eine Ausschleusestation für Windelgruppen,
- Fig. 5: die Einzelheit gemäß Fig. 4 in Seitenansicht gemäß Sichtebene V - V der Fig. 4,
- Fig. 6: ein anderes Ausführungsbeispiel der Gruppiereinrichtung in Seitenansicht,

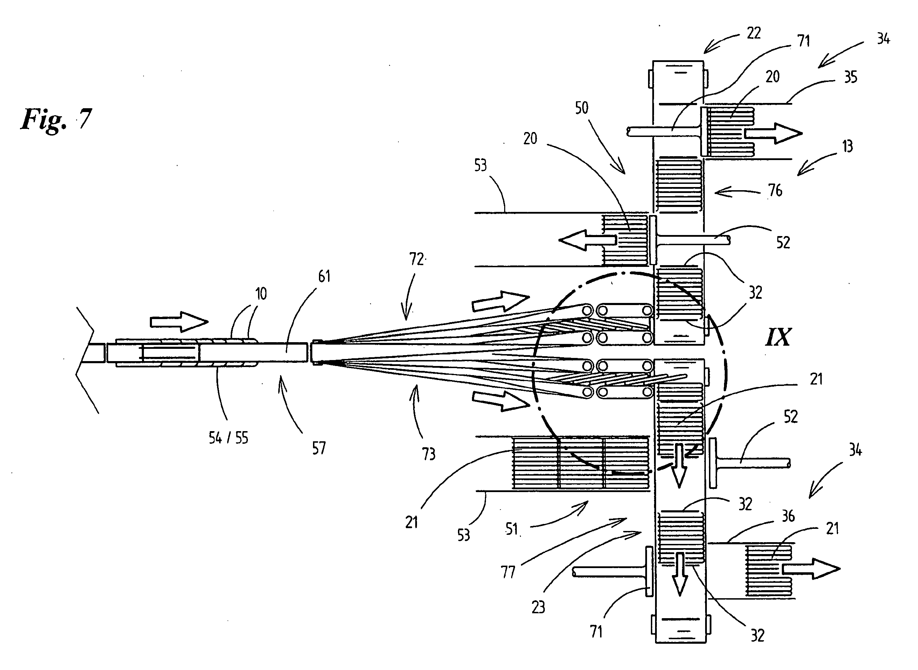

- Fig. 7: die Einrichtung gemäß Fig. 6 in Draufsicht entsprechend Sicht- bzw. Schnittebene VII - VII der Fig. 6,
- Fig. 8: eine Einzelheit VIII der Fig. 6 in vergrößertem Maßstab,
- Fig. 9: eine Einzelheit IX der Fig. 7 in vergrößertem Maßstab,
- Fig. 10: einen Querschnitt bzw. eine Queransicht im Bereich eines Gruppieraggregats entsprechend Schnittebene X - X in Fig. 7
- Fig. 11: ein weiteres Ausführungsbeispiel der Einrichtung in Seitenansicht,
- Fig. 12: die Einrichtung gemäß Fig. 11 in Draufsicht entsprechend Pfeil XII in Fig. 11,
- Fig. 13: eine Einzelheit der Fig. 12, nämlich eine Ausschubstation für Windelgruppen entsprechend Schnitt- bzw. Sichtebene XIII in Fig. 12,
- Fig. 14: die Einzelheit gemäß Fig. 13 bei veränderter Stellung von Organen,
- Fig. 15: eine Längsansicht eines Gruppierförderers der Einrichtung gemäß Fig. 12 in der Sichtebene XV - XV bei vergrößertem Maßstab.

Die Ausführungsbeispiele in den Zeichnungen befassen sich mit der Handhabung von Windeln 10. Es handelt sich dabei um verhältnismäßig flache, annähernd rechteckige Gebilde, die durch Faltung entstehen unter Bildung von zwei gleich großen Schenkeln. Eine gerundete Faltkante 11 ist überwiegend in Förderrichtung nach vorn weisend angeordnet. Anstelle von Windeln 10 können in gleicher Weise flache Gegenstände ähnlicher Form und Größe verarbeitet werden.

Die einzeln von einer Herstellmaschine oder von einem Vorrat zugeführten Windeln 10 sollen zu Gruppen, also Windelgruppen 20, 21, zusammengestellt werden. Jede Windelgruppe 20, 21 entspricht dem Inhalt einer herzustellenden Packung. Die Windelgruppen 20, 21 werden demnach einer Verpackungsmaschine oder mehreren Verpackungsmaschinen (nicht gezeigt) zugeführt. Die vorliegende Einheit, die insgesamt als Gruppiereinrichtung 13 bezeichnet ist, bildet eine Handhabungsstation zwischen der Herstellmaschine und dem Packer.

Die Gruppiereinrichtung 13 schließt an einen Zuförderer 14 an, der die einzelnen Windeln 10 in horizontaler Ebene bzw. horizontaler Ausrichtung von einer Herstellmaschine zuführt. Im Grundaufbau besteht die Gruppiereinrichtung 13 aus mindestens einem Übernahmeförderer 15 im Anschluss an den Zuförderer 14 und aus Zweigförderern 16, 17, die Windeln 10 in zwei Transportbahnen fördern. Hieran schließen Gruppieraggregate 18, 19 an zur Bildung der Windelgruppen 20, 21 und zum Abtransport in zwei gesonderten Bahnen. Jede Windelgruppe 20, 21 besteht aus aufrecht eng aneinander liegenden Windeln 10.

Die Förderer für den Transport der Windeln 10 zum Gruppieraggregat 18, 19 sind als Gurtförderer bzw. als Endlosgurte ausgebildet und so angeordnet, dass jeweils zwei einander zugeordnete Gurte die Windeln 10 zwischen benachbarten Fördertrumen transportieren.

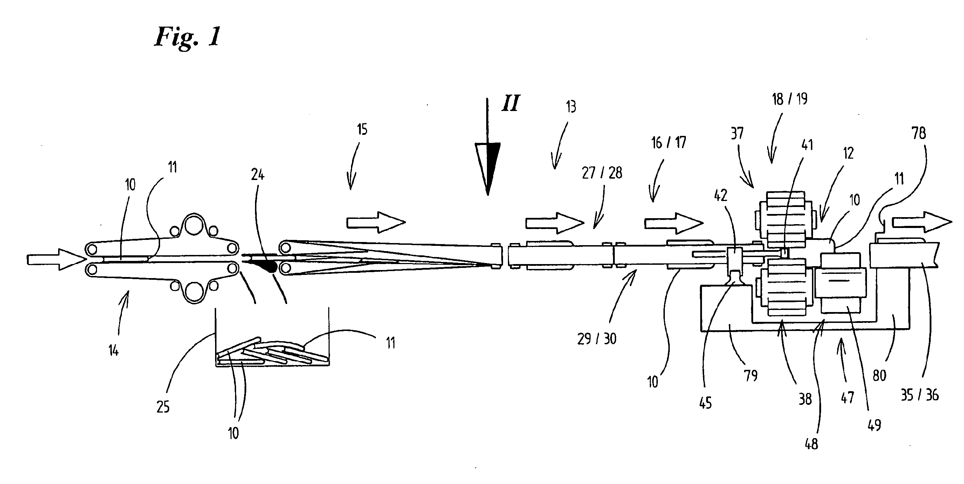

Bei dem Ausführungsbeispiel gemäß Fig. 1 werden die Windeln 10 durch den Übemahmeförderer 15 den beiden Zweigförderern 16, 17 zugeführt. Diese enden unmittelbar im Bereich der Gruppieraggregate 18, 19, nämlich an quergerichteten Gruppierförderern 22, 23. Der Übernahmeförderer 15 ist als Wendeförderer bzw. als Twistgurt ausgebildet. Umlenkwalzen sind mit um 90° versetzen Drehachsen angeordnet. Die ankommenden Windeln 10 werden bei Ausrichtung in horizontaler Ebene übernommen und während des Transports durch den Übernahmeförderer 15 um 90° gewendet in eine aufrechte Stellung. Die Gurte der Zweigförderer 16, 17 sind so angeordnet, dass die Windeln 10 in aufrechter Stellung transportiert werden, also mit in aufrechter Ebene verlaufenden Gurten.

Zwischen dem Zuförderer 14 und der Gruppiereinrichtung 13, nämlich vor dem Übernahmeförderer 15, ist eine Auswurfstation für Windeln 10 gebildet. Ein verstellbares Führungsorgan 24 kann einzelne Windeln 10, insbesondere fehlerhafte Produkte, bei entsprechender Position nach unten ableiten in einen Auffangbehälter 25.

In besonderer Weise sind die Zweigförderer 16, 17 angeordnet und ausgebildet nämlich zur Bildung von zwei divergierenden Transportbahnen für die Windeln 10, sodass diese positionsgenau an den zugeordneten Gruppieraggregaten 18, 19 ankommen. Die Zweigförderer 16, 17 sind in einer gemeinsamen, horizontalen Ebene nebeneinander bzw. in divergierender Formation angeordnet und schließen fördertechnisch an den Übernahmeförderer 15 an. Am Ende desselben bzw. im Eintrittsbereich der Zweigförderer 16, 17 ist eine verstellbare Weiche bzw. ein verstellbares Leitorgan 26 angeordnet. Dieses bewirkt, dass bei entsprechender Relativstellung die einzeln und mit Abstand voneinander ankommenden Windeln 10 alternativ dem einen oder anderen Zweigförderer 16, 17 zugeführt werden, zweckmäßigerweise abwechselnd.

Jeder Zweigförderer 16, 17 besteht aus zwei Paaren voneinander zugeordneten Gurtförderern. An die Weiche bzw. an den Übernahmeförderer 15 schließen Anschlussgurte 27, 28 an. Diese transportieren die Windeln 10 entlang geradliniger, unter einem spitzen Winkel zueinander angeordneter Transportbahnen. Es folgen jeweils Übergabeförderer 29, 30. Diese transportieren die Windeln zum Gruppieraggregat 18, 19 bzw. zu den Gruppierförderern 22, 23.

Die Übergabeförderer 29, 30 aus Endlosgurten sind in besonderer Weise ausgebildet. Aufgrund entsprechender Führung der einander zugeordneten Fördertrume wird eine Ablenkung der Förderbahn geschaffen, derart, dass ein den Gruppieraggregaten 18, 19 zugekehrter Endbereich der Übergabeförderer 29, 30 quer bzw. senkrecht zu den Gruppierförderern 22, 23 gerichtet ist. Jeder Gurt der Übergabeförderer 29, 30 ist mit einer Ausgleichsschleife 31 versehen. Diese ermöglicht auch eine hin- und hergehende Schwenkbewegung der Übergabeförderer 29, 30 bzw. der den Gruppieraggregaten 18, 19 zugekehrten Endbereiche entsprechend der Bewegung des zugeordneten Gruppierförderers 22, 23, also in horizontaler Ebene.

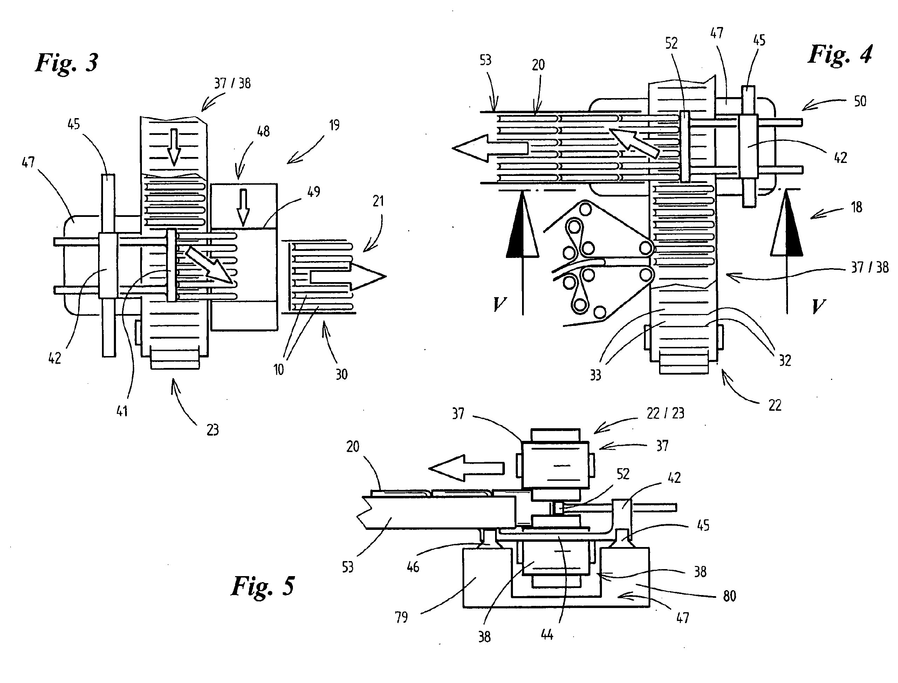

Die Aggregate zur Bildung der Windelgruppen 20, 21 können in unterschiedlicher Weise ausgebildet sein. Grundsätzlich ist mindestens ein quer zur Förderrichtung der ankommenden Windeln 10 gerichteter und bewegbarer Gruppierförderer 22, 23 zur Aufnahme der Windeln 10 unter Bildung von Windelgruppen 20, 21 vorgesehen. Bei dem Ausführungsbeispiel gemäß Fig. 1 - Fig. 5 sind als Gruppierförderer 22, 23 Fächerbänder vorgesehen. Es handelt sich dabei um Endlosgurte mit quer abstehenden Stegen 32 zwischen denen jeweils ein Fach 33 zur Aufnahme einer Windel 10 gebildet ist. Zwischen den Fächerbändern bzw. Gruppierförderern 22, 23 einerseits und den Zuförderern für die Windeln 10, also den Zweigfördern 16, 17, andererseits findet eine Relativbewegung statt, derart, dass die nacheinander ankommenden Windeln 10 in jeweils ein freies Fach 33 eingeführt werden (Fig. 4). So gebildete Windelgruppen 20, 21 werden durch den Gruppierförderer 22, 23 bzw. das Fächerband aus dem Bereich der Zweigförderer 16,17 abtransportiert zu einer Ausschubstation 34. Diese ist bei den Gruppieraggregaten 18, 19 seitlich, also mit größerem Abstand von den Zweigförderern 16, 17 gebildet, und zwar im Bereich von Abförderern 35, 36, die die Windelgruppen 20, 21 entlang getrennter Transportbahnen und unabhängig von einander der Verpackungsmaschine bzw. den Verpackungsmaschinen zuführen.

Die Gruppierförderer 22, 23 bestehen aus einem Oberband 37 und einem Unterband 38. Beide sind bei dem Ausführungsbeispiel gemäß Fig. 1 - Fig. 5 als Fächerbänder ausgebildet. Die Windeln 10 werden zwischen einem Untertrum 39 des Oberbandes 37 und einem Obertrum 40 des Unterbandes 38 eingeführt. Jede Windel 10 wird demnach in einem oberen Teilbereich und in einem unterem Teilbereich durch einander gegenüberliegende Stege 32 der Fächerbänder gehalten. Die Windeln 10 ruhen auf dem Obertrum 40 des Unterbandes 38.

Die beiden Endlosbänder, nämlich Fächerbänder können kontinuierlich oder taktweise angetrieben werden, derart, dass jeweils ein Fach 33 zur Übernahme einer Windel 10 dem Endbereich des einen oder anderen Zweigförderer 16, 17 gegenüber steht (Fig. 4). Alternativ oder zusätzlich kann der Endbereich der Zweigförderer 16, 17, insbesondere der Endbereich der Übergabeförderer 29, 30 in Bewegungsrichtung der Gruppierförderer 22, 23, also der Fächerbänder 37, 38, bewegt werden, derart, dass die ankommenden Windeln 10 nacheinander einem freiem Fach 33 zugeführt werden können.

Im Bereich der Ausschubstation 34 wird die Windelgruppe 20, 21 aus dem Fächerbändern bzw. den Gruppierbändern 22, 23 ausgeschoben und dem Abförderer 35, 36 übergeben. Zu diesem Zweck ist ein Gruppenschieber 41 vorgesehen, der eine einer Windelgruppe 20,21 entsprechende Anzahl von Windeln 10 erfasst und gemeinsam aus dem Bereich des Gruppierförderers 22, 23 bzw. des Fächerbands ausschiebt. Bei dieser Lösung wird demnach die Windelgruppe 20, 21 durch den entsprechend bemessenen Gruppenschieber 41 aus einer fortlaufenden Reihe von Windeln 10 abgesondert (Fig. 3).

Bei vorzugsweise kontinuierlich angetriebenen Gruppierbändern 22, 23 bzw. Fächerbändern in Richtung zur Ausschubstation 34 ist der Gruppenschieber 41 in Förderrichtung, synchron bewegbar in einer Überlagerung mit der Ausschubbewegung (Fig. 3). Zu diesem Zweck ist der Gruppenschieber 41 über Tragstangen mit einem Schlitten 42 verbunden, der hin- und her bewegbar auf einer Führung gelagert ist.

Die von dem Gruppenschieber 41 erfassten Windeln 10 werden gemäß Fig. 3 an einen Zwischenförderer 48 übergeben. Dieser ist als parallel und synchron mit den Gruppierförderern 22, 23 bewegbarer Gurt ausgebildet, der eine Anzahl von Querstegen 49 aufweist. Diese sind in einem Abstand von einander angeordnet, der der Breite bzw. Querabmessung einer Windelgruppe 20, 21 entspricht. Der Zwischenförderer 48 wird synchron mit dem Gruppierförderer 22, 23 bewegt, während die Windelgruppe 20, 21 in eine zwischen zwei benachbarten Querstegen 49 gebildete Aufnahme eingeführt ist. Der Zwischenförderer 48 überträgt die Windelgruppe an den Abförderer 35, 36, vorzugsweise während einer Stillstandsphase des Zwischenförderers 48. Ein gesonderter Abholer 78, der oberhalb der Abförderer 35, 36 hin- und herbewegbar ist, erfasst die auf dem Zwischenförderer 48 bereitgehaltene Windelgruppe 20, 21 und führt diese in den Bereich des Abförderers 35, 36.

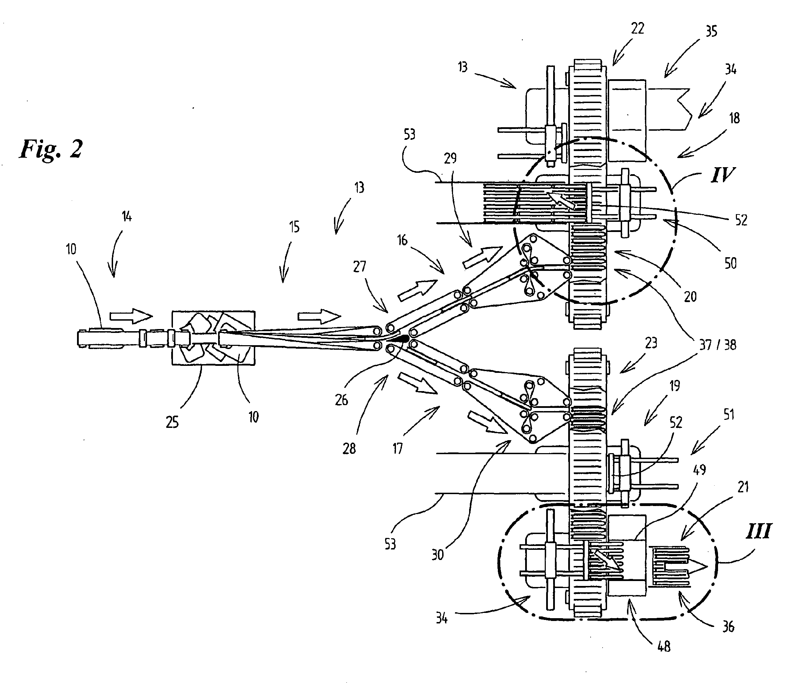

Im Bereich der Gruppieraggregate 18, 19 befindet sich eine hilfsweise einsetzbare Ausschubstation, nämlich eine Hilfsstation 50, 51 für jeden Gruppierförderer 22, 23. Diese Hilfsstation 50,51 nimmt Windelgruppen 20, 21 auf, wenn die Verpackungsmaschine ganz oder teilweise bzw. wenn eine von mehreren Verpackungsmaschinen ausfällt. Die Windeln 10 werden gleichwohl weiterhin zugefördert. Des Weiteren erfolgt eine Zusammenstellung der Windelgruppen 20, 21. Diese werden aber im Bereich der Hilfsstation 50, 51 ausgeschoben, also nicht den Abförderer 35, 36 übergeben. Gemäß Fig. 2, Fig. 4 und 5 werden die Windelgruppen 20, 21 im Bereich der Hilfsstation 50, 51 in entgegengesetzter Richtung zur Ausschubstation 34 von den Gruppierförderern 22, 23 abgeschoben, und zwar durch einen Hilfsschieber 52, der analog zum Gruppenschieber 41 ausgebildet ist, jedoch auf der gegenüberliegenden Seite zu den Gruppierförderern 22, 23 angeordnet ist. Die Hilfsschieber 52 fördern die Windelgruppen 20, 21 in eine Hilfsbahn 53, und zwar in Dichtlage aufeinanderfolgend. Im Bereich der Hilfsbahn 53 werden die Windelgruppen 20, 21 abgenommen, zum Beispiel manuell. Bei Bedarf werden die Windeln 10 wieder in den Verpackungsprozess eingeführt.

Die Hilfsschieber 52 sind analog zu den Gruppenschiebern 41 ausgebildet und mittels Schlitten 42 synchron mit der Bewegung der Gruppierförderer 22, 23 bewegbar. Die Schlitten 42 sind auf Führungsschienen 45, 46 gelagert, die ihrerseits auf einem Maschinengestell 47 zu beiden Seiten der Gruppieraggregate 18, 19 gelagert sind. Das Maschinengestell 47 weist zu diesem Zweck aufrechte Schenkel 79, 80 auf, auf denen zum einen die Führungsschienen 45, 46 und zum anderen die Abförderer 35, 36 (Fig. 1) gelagert sind. Im Bereich der Hilfsstationen 50, 51 sind beide Schenkel 79, 80 mit Führungsschienen 45, 46 versehen. Auf der einen Seite dient die Führungsschiene 45 zur Aufnahme des Schlittens 42 für den Hilfsschieber 52. Gegenüberliegend ist die Hilfsbahn 53 ebenfalls mit einer schlittenartigen Führung auf der Führungsschiene 46 gelagert. Die Führung der Hilfsbahn 43 ist über einen Verbindungssteg 44 mit dem Schlitten 42 verbunden, so dass der Hilfsschieber 52 mit der Hilfsbahn 53 als Einheit verschiebbar sind, synchron mit der Bewegung der Gruppierförderer 22, 23.

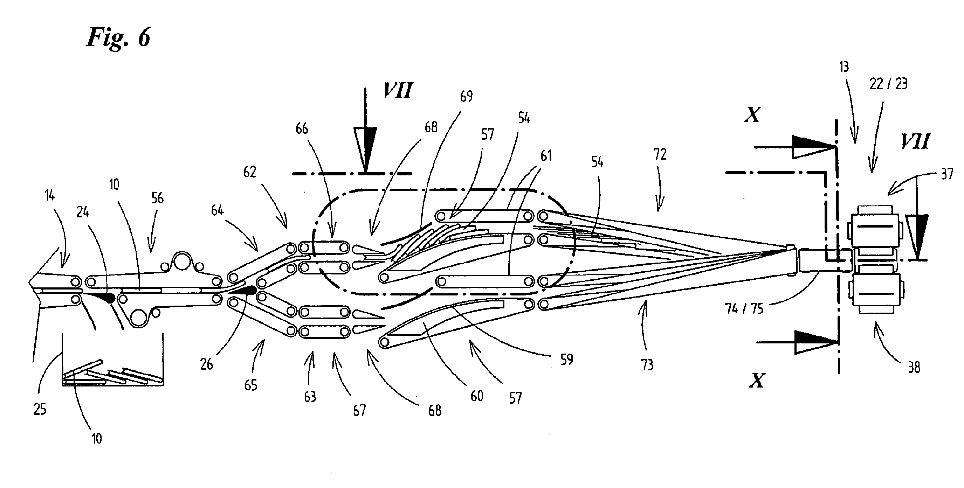

Ein besonderes Ausführungsbeispiel ist in Fig. 6 - Fig. 5 gezeigt. Die Besonderheit besteht darin, dass vor den Gruppieraggregaten 18, 19 Windeln 10 entsprechend einer Windelgruppe 20, 21 zu einer Vorgruppe 54, 55 zusammengeführt und als solche bis zur Übergabe an die Gruppieraggregate 18, 19 transportiert werden. Die Windeln 10 der Vorgruppe 54, 55 sind mit wechselseitiger Teilüberdeckung zueinander angeordnet, nämlich schuppenartig formiert (Fig. 6, Fig. 8, Fig. 9).

Die von dem Zuförderer 14 transportierten Windeln 10 werden an einen Vorförderer 56 übergeben. Dieser transportiert die Windeln 10 zu einem Schuppenförderer 57, in dessen Bereich die Vorgruppe 54, 55 gebildet bzw. die schuppenartige Formation der Windeln 10 geschaffen wird. Der Schuppenförderer 57 besteht zu diesem Zweck aus einem (unteren) Trägerband 58, auf dem die Windeln 10 bei der Bildung der Schuppenformation aufliegen. Das Trägerband 58 ist luftdurchlässig, insbesondere als Lochband ausgebildet. Unterhalb eines Fördertrums 59 befindet sich ein Saugkasten bzw. eine Vakuumkammer 60, die im Transportbereich für die Windeln 10 einen Unterdruck erzeugt, so dass die Windeln 10 an den Fördertrum 58 angedruckt werden unter Aufrechterhaltung der gebildeten Formation.

Das Trägerband 58 hat eine Doppelfunktion, wirkt nämlich als Stauorgan für die ankommenden Windeln 10. Die Windeln 10 werden im Bereich des Trägerbands 58 gesammelt und auf Grund verminderter Fördergeschwindigkeit desselben mit einer Teilüberdeckung abgelegt. Die Schuppenformation wird durch ein oberhalb des Trägerbands 58 angeordnetes Stützband 61 gefördert, welches die Vorgruppe 54 an den Fördertrum 59 andrückt.

Der Schuppenförderer 57 ist in ein Fördersystem integriert. Bei dem Ausführungsbeispiel gemäß Fig. 6 schließen an den Vorförderer 56 zwei Teilfördereinheiten 62, 63 an, die zunächst die einzelnen Windeln 10 und danach die Vorgruppen 54, 55 entlang gesonderter Transportbahnen fördern zur Erhöhung der Leistungsfähigkeit. Diese Transportbahnen bzw. die Teilfördereinheiten 62, 63 sind übereinander angeordnet.

Im Eintrittsbereich der Teilfördereinheiten 62, 63, nämlich im Anschluss an den Vorförderer 56, ist ein Leitorgan 26 angeordnet, welches in der beschriebenen Weise die Windeln 10 alternativ der einen oder anderen Teilfördereinheit 62, 63 zuführt. Die Windeln 10 werden im Anschluss an das Leitorgan 26 von Schrägförderern 64, 65 übernommen und an übereinander angeordnete Parallelförderer 66, 67 übergeben. Hieran schließt ein Mundstück 68 zur Übergabe der Windeln 10 an den bogenförmig bzw. gewölbt geführten Fördertrum 59 des Schuppenförderers 57. Aufgrund der Gestaltung und Anordnung des Schuppenförderers 57 werden die Windeln 10 unter einem fördertechnisch günstigen spitzen Winkel an den Fördertrum 59 übergeben. An der Oberseite ist eine feststehende Führung 69 angeordnet.

Die in zwei Bahnen übereinander transportierten Vorgruppen 54, 55 werden von Zweigförderern 72, 73 übernommen und zu den Gruppieraggregaten 18, 19 transportiert. Die Zweigförderer 72, 73 sind hier in besonderer Weise ausgebildet, nämlich mit einer Doppelfunktion. Auf Grund entsprechender Relativstellung von Umlenkwalzen werden die Windeln 10 als Vorgruppe 54, 55 während des Transports gewendet, nämlich in eine aufrechte Stellung bewegt. Des Weiteren wird aufgrund entsprechender Führung der Gurte der Zweigförderer 72, 73 bewirkt, dass diese in den den Gruppieraggregaten 18, 19 zugeordneten Bereichen in einem horizontalen Abstand voneinander verlaufen, nämlich entsprechend der Position der Übergabe der Windeln an Gruppierförderer 76, 77.

Die Windeln 10 bzw. schuppenartigen Vorgruppen 54, 55 werden im Anschluss an die Zweigförderer 72, 73 von parallel laufenden Übergabeförderern 74, 75 übernommen. Diese münden unmittelbar im Bereich der Gruppieraggregate 18, 19, nämlich vor quergerichteten Gruppierförderern 76, 77.

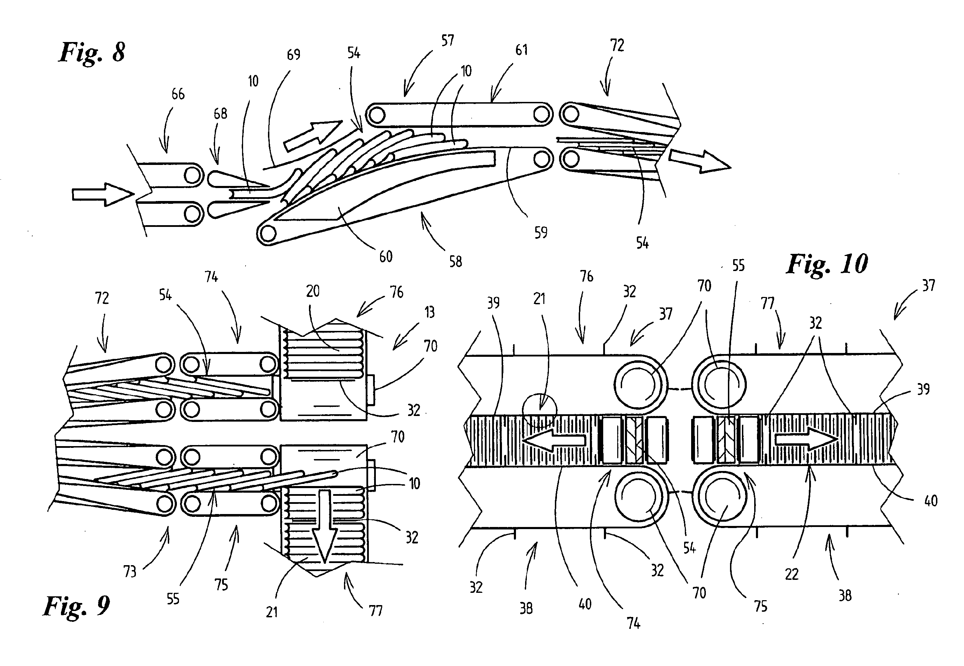

Die Gruppierstation ist analog zu dem Ausführungsbeispiel gemäß Fig. 1 - Fig. 5 ausgebildet, nämlich mit zwei quer und entgegengesetzten Richtungen transportierenden Gruppierförderern 76, 77. Diese sind als modifizierte Fächerförderer, nämlich als Taschenförderer ausgebildet mit Stegen 32, die in einem der Abmessung einer Windelgruppe 20, 21 entsprechenden Abstand voneinander angeordnet sind. Zwischen aufeinanderfolgenden Stegen 32 findet demnach eine Windelgruppe 20, 21 passend Aufnahme. Zur störungsfreien Handhabung der Windeln 10 bzw. Windelgruppen 20, 21 sind auch bei diesem Ausführungsbeispiel Oberband 37 und Unterband 38 zur Bildung jeweils eines Gruppierförderers 76, 77 vorgesehen. Die Stege 32 der einander zugeordneten Förderer sind ausgerichtet, sodass eine Windelgruppe 20, 21 auf einem Obertrum 40 des Unterbands 38 abgestützt und von den Stegen 32 eines Untertrums 39 des Oberbands 37 gehalten werden (Fig. 10).

Die Übergabe der in schuppenartiger Formation ausgebildeten Windeln 10 der Vorgruppen 54, 55 an die Gruppierförderer 76, 77 erfolgt in besonderer Weise, nämlich benachbart zu einer Umlenkwalze 70 des betreffenden Gruppierförderers 76, 77. Die Windeln 10 werden nacheinander und ausgerichtet auf dem Obertrum 40 des Unterbands 38 abgesetzt bzw. zwischen Obertrum 40 und Untertrum 39 eingeführt. Die Struktur der Vorgruppen 54, 55 ermöglicht die Ablage der Windeln auf den Gruppierförderern 76, 77 durch Anlegen einer Windel 10 an die bereits gebildete Teilgruppe auf den Gruppierförderern 76, 77. Auf der freien Seite werden die abzulegenden Windeln 10 aufgrund der schuppenartigen Formation durch nachfolgende Windeln gestützt. Die Fördergeschwindigkeit der Übergabeförderer 74, 75 und die quer gerichtete Bewegung der Gruppierförderer 76, 77 sind aufeinander abgestimmt.

Jedem Gruppierförderer 76, 77 ist eine Ausschubstation 34 zugeordnet entsprechend den vorhergehenden Ausführungsbeispiel. Die Windelgruppen 20, 21 werden unmittelbar von einem Querschieber 71 von dem Gruppierförderer 76, 77 abgeschoben auf den Abförderer 35, 36. Der Querschieber 71 ist auf die Abmessungen einer Tasche zwischen den benachbarten Stegen 32 abgestimmt. Die Bewegungen der Förderer sind aufeinander abgestimmt, also der Übergabeförderer 74, 75 einerseits und der Gruppierförderer 76, 77 andererseits. Zwischen den aufeinanderfolgenden Vorgruppen 54, 55 entstehen Förderlücken. Diese werden bei der Bewegung der Gruppierförderer 76, 77 berücksichtigt. Nach Bildung einer Windelgruppe 20, 21 zwischen benachbarten Stegen 32 wird der jeweilige Gruppierförderer 76, 77 angehalten, wobei die Relativstellungen so gewählt sind, dass eine zuvor gebildete Windelgruppe 20, 21 sich im Bereich eines Querschiebers 71 einer Ausschubstation 34 befindet. Während des Stillstands wird die betreffende Windelgruppe 20, 21 durch den Querschieber 71 von dem Gruppierförderer 76, 77 ab- und auf den benachbarten Abförderer 35, 36 aufgeschoben. Nach Rückkehr des Querschiebers 71 in die Ausgangsstellung wird der Gruppierförderer 76, 77 wieder in Abstimmung mit den Übergabeförderern 74, 75 bewegt zur Aufnahme der Windeln 10 einer nachfolgenden Vorgruppe 54, 55.

In gleicher Weise sind Hilfsstation 50, 51 im Bereich der Gruppiereinrichtung 13 dieses Ausführungsbeispiels positioniert, nämlich mit einer Hilfsbahn 53 und einem Hilfsschieber 52, der ebenfalls während einer Stillstandsphase des jeweiligen Gruppierförderers 76, 77 wirksam werden kann aus den beschriebenen Gründen.

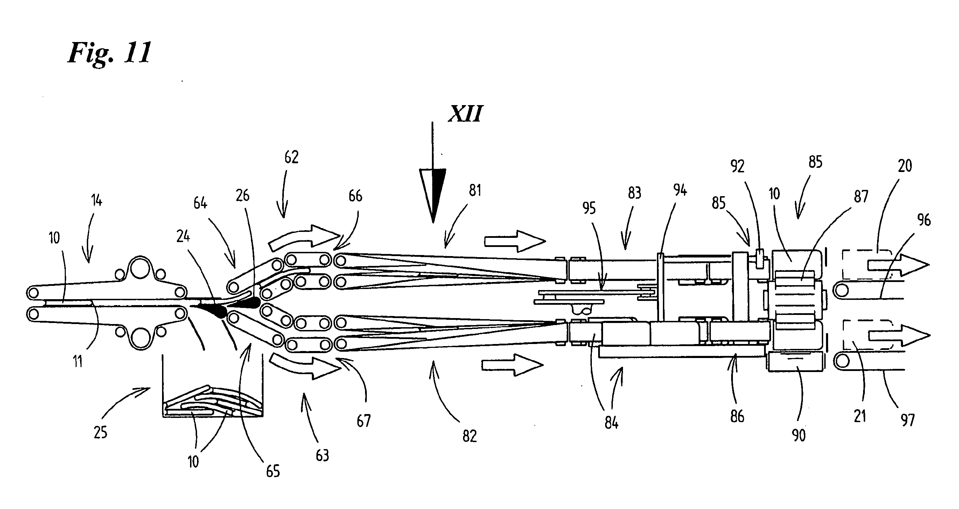

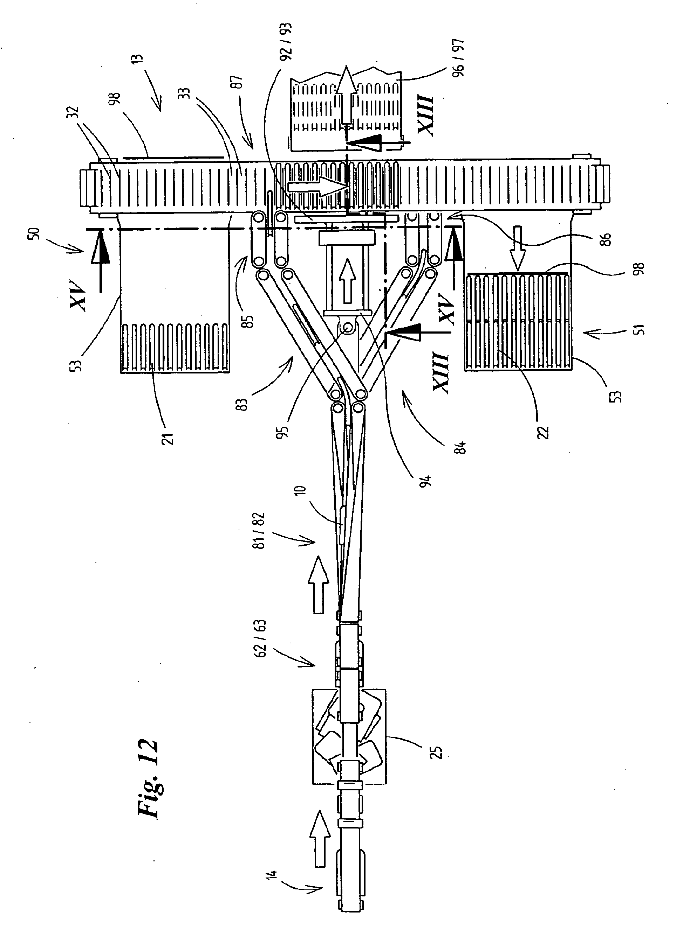

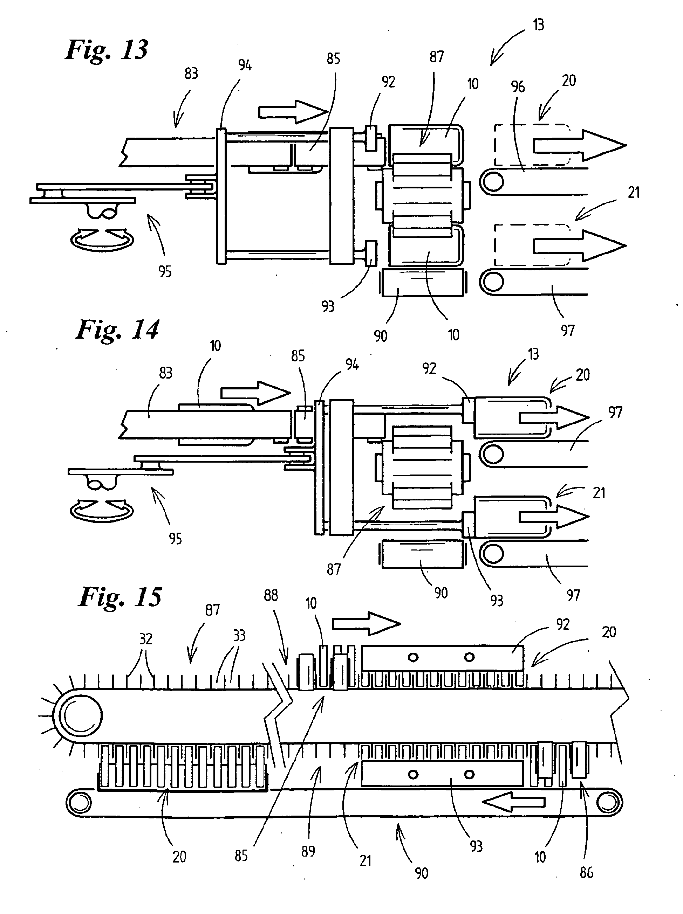

Bei der dritten Alternative gemäß Fig. 11 bis Fig. 15 ist im Anschluss an den Zuförderer 14 ein doppelt wirkendendes Ablenksystem für die einzelnen Windeln 10 vorgesehen. Das Führungsorgan 24 dient zur Ablenkung einzelner Windeln 10 in den Auffangbehälter 25. Unmittelbar anschließend ist das Leitorgan 26 wirksam, welches Windeln 10 alternativ in zwei übereinander angeordnete Förderbahnen für die Windeln 10 lenkt. Das Leitorgan 26 befindet sich im Anfangsbereich von Teilfördereinheiten 62, 63, die analog zu dem Ausführungsbeispiel gemäß Fig. 6 ausgebildet sind. An die Parallelförderer 66, 67 schließen als Zwischenförderer zwei parallel übereinander angeordnete Wendeförderer 81, 82 an entsprechend dem Übernahmeförderer 15 gemäß Fig. 1, Fig. 2. Die Windeln 10 werden von den Wendeförderern 81, 82 in aufrechter Ebene an Zweigförderer 83, 84 übergeben, also an Paare von in übereinander liegenden Ebenen angeordneten Gurten, die - in Draufsicht (Fig. 12) unter einem spitzen Winkel in Förderrichtung divergierend angeordnet sind. Unmittelbar benachbart zur Gruppierstation folgen parallel bzw. in Förderrichtung weisende Übergabeförderer 85, 86, ebenfalls in versetzten Horizontalebenen.

Die Gruppierstation mit einem einzigen, quer gerichteten Gruppierförderer 87 in der Ausführung als Fächerband ist in besonderer Weise ausgebildet. Der Gruppierförderer 87 erstreckt sich als Endlosförderer quer über die gesamte Gruppierstation. Die Windeln 10 werden in der Höhe nach versetzten Ebenen dem gemeinsamen Gruppierförderer 87 übergeben. Der Zweigförderer 83 bzw. der diesem zugeordnete Übergabeförderer 85 übergibt die Windeln 10 an einen Obertrum 88 des Gruppierförderers 87. Die Windeln des Übergabeförderers 86 werden im Bereich eines Untertrums 89 in die Fächer 33 des Fächerbandes eingeführt. Zwischen den Förderern findet eine Relativbewegung statt, nämlich insbesondere eine auf die Zuführung der Windeln 10 abgestimmte Bewegung des Gruppierförderers 87, so dass nacheinander die eine Windelgruppe 20 bildenden Windeln 10 gesammelt werden. In entsprechender Weise wird entgegengesetzt der Untertrum 89 bewegt, derart, dass zeitgleich im Bereich des Untertrums 89 Windeln des Übergabeförderers 86 aufgenommen werden. Im Bereich des Obertrums 80 sind die Windeln 10 auf diesem abgestützt. Im Bereich des Untertrums 89 ist unterhalb des Untertrums 89 ein Stützorgan entsprechend der Höhe der Windeln 10 angeordnet, hier ein in Richtung und in der Geschwindigkeit des Untertrums 89 bewegtes Tragband 90.

Aufgrund der Ansammlung der Windeln 10 für die jeweilige Windelgruppe 20, 21 in entgegengesetzter Richtung ist eine Ausschubstation 91 etwa mittig, jedenfalls zwischen den Übergabeförderern 85, 86 gebildet. Zwei Gruppenschieber 92, 93 sind übereinander angeordnet und werden gleichzeitig betätigt, um jeweils eine Windelgruppe 20, 21 in übereinander angeordneten Ebenen auszuschieben. Die Gruppenschieber 92, 93 sind jeweils im Bereich außerhalb der Fächer 33 bzw. der Stege 32 wirksam, nämlich oberhalb des Obertrums 88 einerseits und unterhalb des Untertrums 89 andererseits. Die Gruppenschieber 92, 93 sind an einem gemeinsamen Träger 94 angeordnet, der durch ein Betätigungsgetriebe 95 hin- und herbewegbar ist. An dem Träger 94 sind jeweils Tragstangen der Gruppenschieber 92, 93 oberhalb und unterhalb von Obergurt 88 und Untergurt 89 angeordnet. Das Betätigungsgetriebe 95 ist hier als Kurbeltrieb ausgebildet und kann in Abstimmung mit der Zuführung der Windeln 10 ständig angetrieben sein. Der Gruppierförderer 87 wird während des Ausschubs zweckmäßigerweise angehalten. Auf der zu den Gruppenschiebern 92, 93 gegenüberliegenden Seite befinden sich als Gurte ausgebildete Abförderer 96, 97, ebenfalls in Ebenen übereinander liegend.

Auch bei diesem Ausführungsbeispiel sind Hilfsstationen 50, 51 im Bereich des Gruppierförderers 87 eingerichtet, und zwar benachbart zu den Umlenkungen des endlosen Fächerbandes. Die Hilfsstationen 50, 51 sind jeweils mit einer Hilfsbahn 53 versehen, die auszusondernde Windelgruppen 20, 21 abfördern entgegengesetzt zur Förderrichtung der Abförderer 96, 97. Den Hilfsbahnen 53 sind Hilfsschieber 98 zugeordnet.

Die beschriebenen Ausführungsbeispiele können hinsichtlich einzelner Aggregate gegeneinander ausgetauscht werden. Insbesondere ist das Konzept der Bildung von Vorgruppen von Windeln bei allen Ausführungen anwendbar.

### Bezugszeichenliste

| | | | |
|---|---|---|---|
| 10 | Windel | 56 | Vorförderer |
| 11 | Faltkante | 57 | Schuppenförderer |
| 12 | | 58 | Trägerband |
| 13 | Gruppiereinrichtung | 59 | Fördertrum |
| 14 | Zuförderer | 60 | Vakuumkammer |
| 15 | Übernahmeförderer | 61 | Stützband |
| 16 | Zweigförderer | 62 | Teilfördereinheit |
| 17 | Zweigförderer | 63 | Teilfördereinheit |
| 18 | Gruppieraggregat | 64 | Schrägförderer |
| 19 | Gruppieraggregat | 65 | Schrägförderer |
| 20 | Windelgruppe | 66 | Parallelförderer |
| 21 | Windelgruppe | 67 | Parallelförderer |
| 22 | Gruppierförderer | 68 | Mundstück |
| 23 | Gruppierförderer | 69 | Führung |
| 24 | Führungsorgan | 70 | Umlenkwalze |
| 25 | Auffangbehälter | 71 | Querschieber |
| 26 | Leitorgan | 72 | Zweigförderer |
| 27 | Anschlussgurt | 73 | Zweigförderer |
| 28 | Anschlussgurt | 74 | Übergabeförderer |
| 29 | Übergabeförderer | 75 | Übergabeförderer |
| 30 | Übergabeförderer | 76 | Gruppierförderer |
| 31 | Ausgleichsschleife | 77 | Gruppierförderer |
| 32 | Steg | 78 | Abholer |
| 33 | Fach | 79 | Schenkel |
| 34 | Ausschubstation | 80 | Schenkel |
| 35 | Abförderer | 81 | Wendeförderer |
| 36 | Abförderer | 82 | Wendeförderer |
| 37 | Oberband | 83 | Zweigförderer |
| 38 | Unterband | 84 | Zweigförderer |
| 39 | Untertrum | 85 | Übergabeförderer |
| 40 | Obertrum | 86 | Übergabeförderer |
| 41 | Gruppenschieber | 87 | Gruppierförderer |
| 42 | Schlitten | 88 | Obertrum |
| 43 | Tragstange | 89 | Untertrum |
| 44 | Verbindungssteg | 90 | Tragband |
| 45 | Führungsschiene | 91 | Ausschubstation |
| 46 | Führungsschiene | 92 | Gruppenschieber |
| 47 | Maschinengestell | 93 | Gruppenschieber |
| 48 | Zwischenförderer | 94 | Träger |
| 49 | Quersteg | 95 | Betätigungsgetriebe |
| 50 | Hilfsstation | 96 | Abförderer |
| 51 | Hilfsstation | 97 | Abförderer |
| 52 | Hilfsschieber | 98 | Hilfsschieber |
| 53 | Hilfsbahn | | |
| 54 | Vorgruppe | | |
| 55 | Vorgruppe | | |

## Patentansprüche

1. Verfahren zur Handhabung von flächigen bzw. dünnwandigen Gegenständen, wie Windeln (10), und zum Transport derselben zu einer Verpackungsmaschine, wobei die Gegenstände, insbesondere Windeln (10), einzeln, aufeinanderfolgend von einer Herstellmaschine bzw. von einem Vorrat kommend im Bereich einer Gruppiereinrichtung zu Gruppen, insbesondere Windelgruppen (20, 21) zusammengestellt und diese der Verpackungsmaschine zugeführt werden, **gekennzeichnet durch** folgende Merkmale:
a) die Gruppen der Gegenstände bzw. die Windelgruppen (20, 21) werden im Anschluss an die Gruppiereinrichtung (13) in zwei Transportbahnen einer zweibahnigen Verpackungsmaschine oder mehreren Verpackungsmaschinen zugeführt,
b) die Gegenstände bzw. Windeln (10) werden in einer Ausrichtung in horizontaler Ebene zugeführt und während des Transports in eine aufrechte Ebene gewendet,
c) die aufrechten Gegenstände bzw. Windeln (10) werden an Gruppieraggregate (18, 19) der Gruppiereinrichtung (13) übergeben zur Bildung von Gruppen der Gegenstände bzw. von Windelgruppen (20, 21) unabhängig voneinander,
d) die Gruppen der Gegenstände bzw. die Windelgruppen (20, 21) werden getrennt voneinander über den Gruppieraggregaten (18, 19) zugeordnete Abförderer (35, 36; 96, 97) der bzw. den Verpackungsmaschinen zugeführt.

2. Vorrichtung zum Handhaben von flächigen bzw. dünnwandigen, insbesondere rechteckigen oder quadratischen Gegenständen, wie Windeln (10), im Zusammenhang mit der Zuführung von Gruppen der Gegenstände oder Windelgruppen (20, 21) zu einer Verpackungsmaschine, wobei die Gruppen bzw. Windelgruppen (20, 21) im Bereich einer Gruppiereinrichtung (13) durch Gruppierförderer (22, 23; 76, 77; 87,) zusammenstellbar und der Verpackungsmaschine gruppenweise zuführbar sind, **gekennzeichnet durch** folgende Merkmale:
a) ein Zuförderer (14) dient zur Zuführung der Gegenstände, insbesondere Windeln (10), in horizontaler Ausrichtung derselben,
b) ein nachfolgender Wendeförderer (15, 81) dient zum Wenden der Gegenstände bzw. Windeln (10) aus der horizontalen Ausrichtung in eine aufrechte Stellung,
c) zwei unter einem spitzen Winkel in Förderrichtung divergierende Zweigförderer (16, 17) dienen zum Transport der Gegenstände bzw. Windeln (10) in aufrechter Stellung zu einem Gruppieraggregat (18, 19) mit Gruppierförderer (22, 23, 87) zur Bildung von Windelgruppen (20, 21) aus den **durch** die Zweigförderer (16, 17) zugeführten Windeln (10) und zur Übergabe der Windelgruppen (20, 21) an einen Abförderer (35, 36; 96, 97),
d) ein verstellbares Leitorgan dient zur Zuleitung der Gegenstände bzw. Windeln zu dem einen oder zu dem anderen Zweigförderer (16, 17).

3. Vorrichtung nach Anspruch 2, **dadurch gekennzeichnet, dass** die Windeln (10) durch den Zuförderer (14) in horizontaler Ausrichtung und während des weiteren Transports durch Wendeförderer (15, 81) in aufrechter Stellung transportierbar sind, wobei der Wendeförderer (15, 81) aus zwei Gurtförderern besteht, die die Windeln (10) aus horizontaler Ebene in eine aufrechte Ebene wenden, derart, dass die Windeln (10) der Gruppiereinrichtung (13) bzw. den Gruppierförderern (22, 23; 87) in aufrechter Position zuführbar sind.

4. Vorrichtung nach Anspruch 2 oder einem der weiteren Ansprüche, **dadurch gekennzeichnet, dass** an die unter einem spitzen Winkel, divergierend angeordneten Zweigförderer (16, 17; 52, 53; 83, 84) für die Windeln (10) parallel gerichtete Übergabeförderer (29, 30; 74, 75; 85, 86) anschließen, die etwa senkrecht bzw. quer zu den Gruppierförderern (22, 23; 76, 77; 87) gerichtet sind.

5. Vorrichtung nach Anspruch 2 oder einem der weiteren Ansprüche, **gekennzeichnet durch** folgende Merkmale:
a) die Gruppierförderer (22, 23) sind quer zum Zuförderer (14) bzw. zu den Zweigförderern (16, 17) angeordnet,
b) die Gruppierförderer (22, 23) sind entgegengerichtet angetrieben, derart, dass jeder Gruppierförderer (22, 23) eine Windelgruppe (20, 21) einem jedem Gruppierförderer (22, 23) zugeordneten Abförderer (35, 36) für die Windelgruppen (20, 21) zuführt,
c) die Windelgruppen (21, 22) sind im Bereich einer Ausschubstation (34) der Gruppierförderer (22, 23) **durch** Gruppenschieber (41) von dem Gruppierförderer (22, 23) abschiebbar und jeweils dem Abförderer (35, 36) zuführbar.

6. Vorrichtung nach Anspruch 5 oder einem der weiteren Ansprüche, **dadurch gekennzeichnet, dass** der Gruppenschieber (41) synchron mit den Gruppierförderern (22, 23) in deren Förderrichtung während der Ausschubbewegung mitläuft, wobei insbesondere die Windelgruppen (20, 21) an einen neben dem Gruppierförderer (22, 23) angeordneten Zwischenförderer (48) übertragbar sind, der synchron mit den Gruppierförderern (22, 23) bewegbar ist und eine Aufnahme für die Windelgruppe (20, 21) aufweist, wobei diese durch einen gesonderten Abschubförderer bzw. Abholer (78) von dem Zwischenförderer (48) dem jeweiligen Abförderer (35, 36) zuführbar sind.

7. Vorrichtung nach Anspruch 2 oder einem der weiteren Ansprüche, **dadurch gekennzeichnet, dass** die Gruppierförderer (22, 23; 76, 77) aus jeweils zwei übereinander angeordneten Endlosgurten in der Ausbildung als Fächerförderer oder als Förderer mit in größerem Abstand voneinander angeordneten Stegen (32) ausgebildet sind, wobei die zwischen Stegen (32) angeordneten Windeln (10) bzw. Windelgruppen (20, 21) im Bereich zwischen einem Untertrum (39) eines Oberbands (37) einerseits und einem Obertrum (40) eines Unterbands (38) gehalten bzw. transportierbar sind.

8. Vorrichtung nach Anspruch 2 oder einem der weiteren Ansprüche, **dadurch gekennzeichnet, dass** die Gruppiereinrichtung (13) aus einem gemeinsamen Gruppierförderer (87), insbesondere in der Ausführung als Fächerband, besteht, wobei Windelgruppen (20, 21) einerseits im Bereich eines Obertrums (88) und andererseits im Bereich eines Untertrums (89) gebildet sind und zugeordnete Abförderer (96, 97) für die Windelgruppen (20, 21) in übereinander angeordneten Ebenen verlaufen.

9. Vorrichtung nach Anspruch 8 oder einem der weiteren Ansprüche, **dadurch gekennzeichnet, dass** Windeln im Bereich des Untertrums (89) auf einer Unterstützung ruhen, insbesondere auf einem synchron mit dem Untertrum (89) (kontinuierlich) bewegbaren Tragband (50).

10. Vorrichtung nach Anspruch 8 oder einem der weiteren Ansprüche, **dadurch gekennzeichnet, dass** Zuführförderer für Windeln (10), insbesondere Zweigförderer (83, 84) und/oder Übergabeförderer (85, 86) entsprechend der Position von Obertrum (88) und Untertrum (89) in der Höhe nach versetzten Ebenen geführt sind und in Förderrichtung des Gruppierförderers (87) mit Abstand voneinander angeordnet sind, derart, dass die Windeln (10) Bereichen des Obertrums (88) und des Untertrums (89) des gemeinsamen Gruppierförderers (87) zuführbar sind.

11. Vorrichtung nach Anspruch 2 oder einem der weiteren Ansprüche, **dadurch gekennzeichnet, dass** die Gruppiereinrichtung (13) Hilfsstationen (50, 51) aufweist, insbesondere je eine Hilfsstation (50, 51) im Bereich der Gruppierförderer (22, 23; 76, 77; 87) zum Abtransport von Windelgruppen (20, 21) bei Stillstand bzw. reduzierter Leistung der Verpackungsmaschinen, wobei jede Hilfsstation (50, 51) eine Hilfsbahn (53) aufweist zur Aufnahme der Windelgruppen (20, 21), die durch Hilfsschieber (52) in die Hilfsbahnen (53) einführbar sind, vorzugsweise in entgegengesetzter Richtung zu den Abförderern (35, 36).

## Claims

1. A method of handling planar or thin-walled articles, such as diapers (10), and of transporting the same to a packaging machine, with the articles, in particular diapers (10), coming individually one after the other from a production machine or from a store, being combined into groups, in particular diaper groups (20, 21), in the region of a grouping arrangement and these groups being fed to the packaging machine, **characterized by** the following features:
a) following the grouping arrangement (13), the groups of articles or the diaper groups (20, 21) are fed along two transporting paths to a two-path packaging machine or a plurality of packaging machines,
b) the articles or diapers (10) are fed with positioning in a horizontal plane and, as they are transported, are turned into an upright plane,
c) the upright articles or diapers (10) are transferred to grouping subassemblies (18, 19) of the grouping arrangement (13) to form groups of articles or of diaper groups (20, 21) independently of one another,
d) the groups of articles or diaper groups (20, 21) are fed separately from one another to the packaging machine(s) via removal conveyors (35, 36; 96, 97) assigned to the grouping subassemblies (18, 19),

2. An apparatus for handling planar or thin-walled, in particular rectangular or square articles, such as diapers (10), in conjunction with groups of articles or diaper groups (20, 21) being fed to a packaging machine, it being possible for the groups or diaper groups (20, 21) to be combined in the region of a grouping arrangement (13) by grouping conveyors (22, 23; 76, 77; 87) and to be fed to the packaging machine in groups, **characterized by** the following features:
a) a feed conveyor (14) is employed to introduce the articles, in particular diapers (10), in a horizontal orientation of same,
b) a downstream turning conveyor (15, 81) is employed to turn the items or diapers (10) from their horizontal orientation into an upright position,
c) two branching conveyors (16, 17), which diverge at an acute angle in the conveying direction, serve to transport the articles or diapers (10) in an upright position to a grouping subassembly (18, 19) with grouping conveyor (22, 23, 87), for forming diaper groups (20, 21) from the diapers (10) supplied by the branching conveyors (16, 17) and for transferring the diaper groups (20, 21) to a removal conveyor (35, 36; 96, 97),
d) an adjustable directing mechanism serves for feeding the articles or diapers to one or the other branching conveyor (16, 17).

3. The apparatus as claimed in claim 2, **characterized in that** the diapers (10) can be transported by the feed conveyor (14) in a horizontal orientation and further transported in an upright position by turning conveyors (15, 81), wherein the turning conveyor (15, 81) comprises two belt conveyors, which turn the diapers (10) from the horizontal plane into a vertical plane such that the diapers (10) can be fed in an upright position to the grouping arrangement (13) or to the grouping conveyors (22, 23; 87).

4. The apparatus as claimed in claim 2 or one of the further Claims of the further claims, **characterized in that** the branching conveyors (16, 17; 52, 53; 83, 84) for the diapers (10), which are arranged to diverge at an acute angle, are followed by parallel transfer conveyors (29, 30; 74, 75; 85, 86), which are directed approximately perpendicularly or transversely to the grouping conveyors (22, 23; 76, 77; 87).

5. The apparatus as claimed in claim 2 or one of the further claims, **characterized by** the following features:
a) the grouping conveyors (22, 23) are arranged transversely to the feeding conveyor (14) or the branching conveyors (16, 17),
b) the grouping conveyors (22, 23) are driven in opposite directions such that each grouping conveyor (22, 23) feeds a diaper group (20, 21) to a removal conveyor (35, 36) associated with each grouping conveyor (22, 23) for the diaper groups (20, 21),
c) in the region of a pushing-out station (34) of the grouping conveyors (22, 23), the diaper groups (21, 22) can be pushed from the grouping conveyor (22, 23) by a group pusher (41) and in each case fed to the removal conveyor (35, 36).

6. The apparatus as claimed in claim 5 or one of the further claims, **characterized in that** the group pusher (41) runs along synchronously with the grouping conveyors (22, 23), in the conveying direction of the latter during the pushing-out movement, in particular it being possible for the diaper groups (20, 21) to be transferred to an intermediate conveyor (48), which is arranged alongside the grouping conveyor (22, 23), can be moved synchronously with the grouping conveyors (22, 23) and has a holder for the diaper group (20, 21), it being possible for the diaper groups (20, 21) to be fed from the intermediate conveyor (48) to the respective removal conveyor (35, 36) by a separate pushing-out conveyor or pick-up means (78).

7. The apparatus as claimed in claim 2 or one of the further claims, **characterized in that** the grouping conveyors (22, 23; 76, 77) are formed from in each case two endless belts which are arranged one above the other and are designed as compartmentalized conveyors or as conveyors with crosspieces (32) which are spaced apart from one another at relatively large intervals, it being possible for the diapers (10) or diaper groups (20, 21), which are arranged between the crosspieces (32), to be retained and transported in the region between a bottom strand (39) of a top belt (37), on the one hand, and a top strand (40) of a bottom belt (38), on the other hand.

8. The apparatus as claimed in claim 2 or one of the further claims, **characterized in that** the grouping arrangement (13) comprises a common grouping conveyor (87), in particular configured as a compartmentalized belt, with diaper groups (20, 21) being formed, on the one hand, in the region of a top strand (88) and, on the other hand, in the region of a bottom strand (89), and associated removal conveyors (96, 97) for the diaper groups (20, 21) running in planes arranged one above the other.

9. The apparatus as claimed in claim 8 or one of the further claims, **characterized in that** diapers, in the region of the bottom strand (89), rest on a support, in particular on a carrying belt (50) which can be (continuously) moved synchronously with the bottom strand (89).

10. The apparatus as claimed in claim 8 or one of the further claims, **characterized in that** feed conveyors for diapers (10), in particular branching conveyors (83, 84) and/or transfer conveyors (85, 86), are guided, in accordance with the position of the top strand (88) and bottom strand (89), in vertically offset planes and are spaced apart from one another in the conveying direction of the grouping conveyor (87) such that the diapers (10) can be fed to regions of the top strand (88) and of the bottom strand (89) of the common grouping conveyor (87).

11. The apparatus as claimed in claim 2 or one of the further claims, **characterized in that**, the grouping arrangement (13) has auxiliary stations (50, 51), in particular a respective auxiliary station (50, 51) in the region of the grouping conveyors (22, 23; 76, 77; 87) for removing diaper groups (20, 21) when the packaging machines are at a standstill or operating with reduced output, with each auxiliary station (50, 51) having an auxiliary path (53) for accommodating the diaper groups (20, 21), which can be introduced into the auxiliary paths (53), preferably in the opposite direction to the removal conveyors (35, 36), by auxiliary pushers (52).

## Revendications

1. Procédé pour la manutention d'objets plats ou à parois minces, par exemple des couches culottes (10), et pour leur transport vers une machine d'emballage,
les objets et notamment les couches culottes (10) provenant un à un, successivement d'une machine de fabrication et d'une réserve, étant rassemblés en groupes, notamment en groupes (20, 21) de couches culottes, au niveau d'un dispositif de regroupement, ces groupes étant apportés à la machine d'emballage, le procédé étant **caractérisé par** les caractéristiques suivantes :
a) à la suite du dispositif de regroupement (13), les groupes d'objets ou les groupes (20, 21) de couches culottes sont apportés sur deux pistes de transport vers une machine d'emballage à deux pistes ou vers plusieurs machines d'emballage,
b) les objets ou couches culottes (10) sont amenés en étant orientés dans un plan horizontal et sont tournés dans un plan vertical pendant le transport,
c) les objets ou couches culottes (10) debout sont transférés à des ensembles de regroupement (18, 19) du dispositif de regroupement (13) pour former des groupes d'objets ou des groupes (20, 21) de couches culottes indépendants les uns des autres,
d) les groupes d'objets ou les groupes (20, 21) de couches culottes sont apportés à la ou aux machines d'emballage séparément les uns des autres par des transporteurs d'évacuation (35, 36; 96, 97) associés aux ensembles de regroupement (18, 19).

2. Dispositif de manutention d'objets plats ou à parois minces, notamment d'objets rectangulaires ou carrés, par exemple des couches culottes (10), en association avec l'amenée de groupes d'objets ou de groupes (20, 21) de couches culottes vers une machine d'emballage,
les groupes ou groupes (20, 21) de couches culottes pouvant être rassemblés au niveau d'un dispositif de regroupement (13) par des transporteurs de regroupement (22, 23; 76, 77; 87) et apportés par groupes à la machine d'emballage,
le dispositif étant **caractérisé par** les caractéristiques suivantes :
a) un transporteur d'amenée (14) sert à amener les objets et en particulier des couches culottes (10) dans une orientation horizontale,
b) un transporteur-redresseur (15, 81) prévu en aval sert à redresser les objets ou couches culottes (10) depuis l'orientation horizontale jusque dans une position debout,
c) deux transporteurs ramifiés (16, 17) qui divergent l'un de l'autre sous un angle aigu dans la direction de transport servent à transporter les objets ou couches culottes (10) en position debout vers un ensemble de regroupement (18, 19) doté de transporteurs de regroupement (22, 23, 87) pour former des groupes (20, 21) de couches culottes à partir des couches culottes (10) apportées par les transporteurs ramifiés (16, 17) et à transférer les groupes (20, 21) de couches culottes vers un transporteur d'évacuation (35, 36; 96, 97) et
d) un organe ajustable de guidage sert à amener les objets ou couches culottes vers l'un ou l'autre des transporteurs ramifiés (16, 17).

3. Dispositif selon la revendication 2, **caractérisé en ce que** les couches culottes (10) peuvent être transportées par le transporteur d'amenée (14) dans une orientation horizontale et dans une position debout pendant la poursuite du transport par le transporteurredresseur (15, 81), le transporteur-redresseur (15, 81) étant constitué de deux transporteurs à bande qui font tourner les couches culottes (10) depuis le plan horizontal jusque dans un plan debout de telle sorte que les couches culottes (10) puissent être amenées en position debout au dispositif de regroupement (13) ou aux transporteurs de regroupement (22, 23; 87).

4. Dispositif selon la revendication 2 ou l'une des autres revendications, **caractérisé en ce que** des transporteurs de transfert (29, 30; 74, 75; 85, 86) orientés en parallèle et sensiblement perpendiculairement ou transversalement par rapport aux transporteurs de regroupement (22, 23; 76, 77; 87) suivent les transporteurs ramifiés (16, 17; 52, 53; 83, 84) prévus pour les couches culottes (10) et divergeant sous un angle aigu.

5. Dispositif selon la revendication 2 ou l'une des autres revendications, **caractérisé par** les caractéristiques suivantes :
a) les transporteurs de regroupement (22, 23) sont disposés transversalement par rapport au transporteur d'amenée (14) ou aux transporteurs ramifiés (16, 17),
b) les transporteurs de regroupement (22, 23) sont entraînés dans des sens opposés de telle sorte que chaque transporteur de regroupement (22, 23) amène un groupe (20, 21) de couches culottes à un transporteur d'évacuation (35, 36) de groupes (20, 21) de couches culottes associé à chaque transporteur de regroupement (22, 23) et
c) au niveau d'un poste de séparation (34) des transporteurs de regroupement (22, 23), les groupes (21, 22) de couches culottes peuvent être séparés du transporteur de regroupement (22, 23) par des poussoirs de regroupement (41) et apportés au transporteur d'évacuation (35, 36).

6. Dispositif selon la revendication 5 ou l'une des autres revendications, **caractérisé en ce que** le poussoir de groupes (41) se déplace de manière synchronisée avec les transporteurs de regroupement (22, 23) dans la direction de transport de ces derniers pendant le déplacement de séparation,
**en ce que** les groupes (20, 21) de couches culottes peuvent en particulier être transférés à un transporteur intermédiaire (48) disposé à côté du transporteur de regroupement (22, 23), apte à être déplacé de manière synchronisée avec les transporteurs de regroupement (22, 23) et présentant un logement pour les groupes (20, 21) de couches culottes et
**en ce que** ces derniers peuvent être amenés du transporteur intermédiaire (48) au transporteur d'évacuation respectif (35, 36) par un transporteur de séparation séparé ou évacuateur (78).

7. Dispositif selon la revendication 2 ou l'une des autres revendications, **caractérisé en ce que** les transporteurs de regroupement (22, 23; 76, 77) sont formés chacun de deux courroies sans fin disposées l'une au-dessus de l'autre dans une configuration en transporteur à compartiments ou en transporteur présentant des nervures (32) disposées à assez grande distance mutuelle, les couches culottes (10) ou groupes (20, 21) de couches culottes disposés entre les nervures (32) pouvant être maintenus ou transportés au niveau situé entre le brin inférieur (39) d'une bande supérieure (37), d'une part, et le brin supérieur (40) d'une bande inférieure (38).

8. Dispositif selon la revendication 2 ou l'une des autres revendications, **caractérisé en ce que** le dispositif de regroupement (13) est constitué d'un transporteur de regroupement (87) commun, en particulier dans le mode de réalisation comme bande à compartiments, les groupes (20, 21) de couches culottes étant formés d'une part au niveau du brin supérieur (88) et d'autre part au niveau du brin inférieur (89), des transporteurs d'évacuation (96, 97) associés aux groupes (20, 21) de couches culottes s'étendant dans des plans disposés l'un au-dessus de l'autre.

9. Dispositif selon la revendication 8 ou l'une des autres revendications, **caractérisé en ce qu'**au niveau du brin inférieur (89), les couches culottes reposent sur un , appui, en particulier sur une bande transporteuse (50) qui peut être transportée de manière synchronisée (en continu) avec le brin inférieur (89).

10. Dispositif selon la revendication 8 ou l'une des autres revendications, **caractérisé en ce que** des transporteurs d'amenée de couches culottes (10), en particulier les transporteurs ramifiés (83, 84) et/ou le transporteur de transfert (85, 86), sont guidés dans des plans décalés en hauteur en correspondance à la position du brin supérieur (88) et du brin inférieur (89) et sont disposés à distance l'un de l'autre dans la direction de transport du transporteur de regroupement (87) de telle sorte que les couches culottes (10) peuvent être apportées à des parties du brin supérieur (88) et du brin inférieur (89) du transporteur de regroupement (87) commun.

11. Dispositif selon la revendication 2 ou l'une des autres revendications, **caractérisé en ce que** le dispositif de regroupement (13) présente des postes auxiliaires (50, 51), en particulier un poste auxiliaire (50, 51) au niveau de chacun des transporteurs de regroupement (22, 23; 76, 77; 87), pour évacuer les groupes (20, 21) de couches culottes lors de l'arrêt ou du travail à capacité réduite des machines d'emballage, chaque poste auxiliaire (50, 51) présentant une piste auxiliaire (53) qui reprend les groupes (20, 21) de couches culottes qui peuvent être insérés dans les pistes auxiliaires (53) par des poussoirs auxiliaires (52), de préférence dans la direction opposée à celle des transporteurs d'évacuation (35, 36).
